(19) Europäisches Patentamt
European Patent Office
Office européen des brevets

(11) Publication number: **0 323 161 A1**

(12) **EUROPEAN PATENT APPLICATION**

(21) Application number: **88312224.4**

(51) Int. Cl.4: **C08G 73/12**

(22) Date of filing: **22.12.88**

(30) Priority: **28.12.87 JP 333350/87**

(43) Date of publication of application: **05.07.89 Bulletin 89/27**

(84) Designated Contracting States: **AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Kan, Kokiro c/o Mitsui Petrochemical Industries, Ltd. 2-5, Kasumigaseki 3-chome Chiyoda-ku Tokyo(JP)**
Inventor: **Nakayama, Yoshio c/o Mitsui Petrochemical Industries, Ltd. 2-5, Kasumigaseki 3-chome Chiyoda-ku Tokyo(JP)**
Inventor: **Kaneko, Isao c/o Mitsui Petrochemical Industries, Ltd. 2-5, Kasumigaseki 3-chome Chiyoda-ku Tokyo(JP)**
Inventor: **Tomoshige, Toru c/o Mitsui Petrochemical Industries, Ltd. 2-5, Kasumigaseki 3-chome Chiyoda-ku Tokyo(JP)**

(74) Representative: **Myerscough, Philip Boyd et al J.A.Kemp & Co. 14, South Square Gray's Inn London, WC1R 5EU(GB)**

(54) **Imide prepolymer.**

(57) An imide prepolymer containing a reaction product of (i) an unsaturated bisimide having the formula (I):

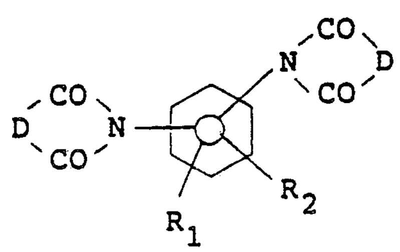

(I)

wherein D represents a divalent group including a double bond between carbon atoms, $R_1$ and $R_2$ independently represent hydrogen, methyl, nitro, cyano or halogen and (ii) an aromatic diamine having the formula (II):

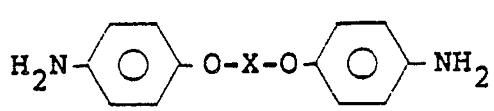

(II)

wherein X represents a divalent group of

**EP 0 323 161 A1**

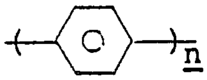

where n is an integer of 1 or more or

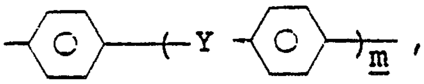

where m is an integer of 1 or more, Y represents a divalent group of -O-, $-CH_2-$, $-CH(CH_3)-$, $-C(CH_3)_2-$, $-C(CF_3)_2-$, -S-, $-SO_2-$, or -CO-.

# IMIDE PREPOLYMER

## BACKGROUND OF THE INVENTION

### 1. Field of the Invention

The present invention relates to an imide prepolymer, particularly an imide prepolymer suitable for the preparation of a cured product having an excellent heat resistance.

### 2. Description of the Related Art

In the prior art, an imide prepolymer comprising a reaction product of an unsaturated bisimide such as N,N′-4,4′-diphenylmethanebismaleimide, and a diamine such as 4,4′-diamonodiphenylmethane, is used as a material for obtaining a cured product. Such a prepolymer, when cured by heating according to various molding methods, provides a cured product having an excellent heat resistance and is useful for molded products such as sliding materials, bearings, and gears.

This imide prepolymer of the prior art, however, is soluble only in solvents having a high polarity, such as N-methylpyrrolidone, dimethylformamide, and dimethylacetamide, and has a poor solubility in a solvent having a low polarity. When the resin solution dissolved in a high polarity solvent is coated on a glass plate and cured by heating, the product thereof will become firm and brittle, and easily fractured when bent, and thus is not a flexible film. Also, the cured product obtained by curing the conventional imide prepolymer by heating, although having an excellent heat resistance, is also brittle, and thus a problem arises in that it is not useful for purposes in which a toughness is demanded, such as molding materials, coating materials, or films.

## SUMMARY OF THE INVENTION

According, the objects of the present invention are to eliminate the above-mentioned problems and to provide an imide prepolymer which is highly soluble in many solvents, and can be cured to provide tough products having a high tensile strength, by various molding methods, and can be formed into a flexible film.

Other objects and advantageous of the present invention will be apparent from the following description.

In accordance with the present invention, there is provided an imide prepolymer comprising a reaction product of (i) an unsaturated bisimide having the formula (I):

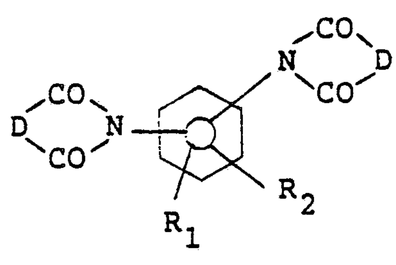

(I)

wherein D represents a divalent group including a double bond between carbon atoms, $R_1$ and $R_2$ independently represent hydrogen, methyl, nitro, cyano or halogen and (ii) an aromatic diamine having the formula (II):

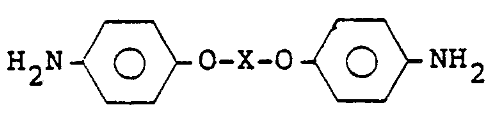

(II)

wherein X represents a divalent group of

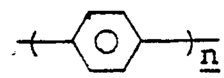

wherein n is an integer if 1 or more or

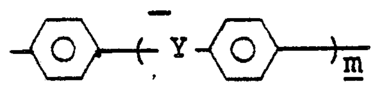

where m is an integer of 1 or more, Y represents a divalent group of -O-, $-CH_2-$, $-C(CH_3)_2-$, $-CH(CH_3)-$, $-C(CF_3)_2-$, -S-, $-SO_2-$ or -CO-.

BRIEF DESCRIPTION OF THE DRAWING

The present invention will be better understood from the description set forth below with reference to the accompanying drawings, wherein:

Figure 1 illustrates an infrared spectrography of the prepolymer obtained in Example 2 below, obtained according to a KBr tablet method by using Hitachi Infrared Spectrophotometer (Model: 260-10); and

Figs. 2 and 3 illustrate GPC charts of the prepolymer obtained in Examples 2 and 3, respectively, obtained according to a GPC method.

DESCRIPTION OF THE PREFERRED EMBODIMENT

Typical examples of the unsaturated bisimide of the formula (I) are N,N'-m-phenylenebismaleimide,
N,N'-p-phenylenebismaleimide,
N,N'-4-methyl-m-phenylenebismaleimide,
N,N'-4,6-dimethyl-m-phenylenebismaleimide,
N,N'-2-methyl-p-phenylenebismaleimide,
N,N'-2,5-dimethyl-p-phenylenebismaleimide,
N,N'-4-chloro-m-phenylenebismaleimide,
N,N'-4-bromo-m-phenylenebismaleimide,
N,N'-2-chloro-p-phenylenebismaleimide,
N,N'-2-bromo-p-phenylenebismaleimide,
N,N'-5-nitro-m-phenylenebismaleimide,
N,N'-2-nitro-p-phenylenebismaleimide, and
N,N'-2-cyano-p-phenylenebismaleimide.

Typical examples of the aromatic diamine of the formula (II) are 1,3-bis)4-aminophenoxy)benzene,
1,3-bis(3-aminophenoxy)benzene,
1,4-bis(4-aminophenoxy)benzene,
1,4-bis(3-aminophenoxy)benzene,
1,6-bis(4-aminophenoxy)biphenyl,
1,6-bis(3-aminophenoxy)biphenyl,
2,2-bis[4-(4-aminophenoxy)phenyl]propane,
2,2-bis[4-)3-aminophenoxy)phenyl]propane,
2,2-bis[4-(4-aminophenoxy)phenyl]hexafluoropropane,
bis[4-(4-aminophenoxy)phenyl]methane,
bis[4-(3-aminophenoxy)phenyl]methane,
bis[4-(4-aminophenoxy)phenyl]sulfide,
bis[4-(3-aminophenoxy)phenyl]sulfide,
bis[4-(4-aminophenoxy)phenyl]sulfone,
bis[4-(3-aminophenoxy)phenyl]sulfone, and
bis[4-(4-aminophenoxy)phenyl]ketone.

The imide prepolymer of the present invention is a reaction product of an unsaturated bisimide of the

above-mentioned formula (I) and an aromatic diamine of the above formula (II). The moler ratio of unsaturated bisimide of the formula (I)/aromatic diamine of the formula (II) is preferably 1.0 to 1.4, more preferably 1.1. The number average molecular weight/weight average molecular weight of the imide prepolymer of the present invention is preferably within 500/600 to 4000/16000.

The imide prepolymer of the present invention is prepared by reacting an unsaturated bisimide of the formula (I) with an aromatic diamine of the formula (II). In this case, the mole ratio of the unsaturated bisimide to the aromatic diamine is made 1.0 to 1.4, and the reaction is carried out in a molten state or by heating in a solvent such as dimethylformamide, N-methylpyrrolidone, methyl cellosolve, diglyme, and m,p-cresol, optionally in the co-presence of a small amount of a radical trapping agent and or a carboxylic acid. The reaction temperature is 80 to 200°C, preferably 100 to 180°C, and the reaction time 5 minutes to 7 hours, preferably 10 minutes to 5 hours.

Examples of the radical trapping agent which can be optionally used during the reaction include hydroquinone derivatives such as hydroquinone, t-butylhydroquinone, and 2,6-di-t-butylhydroquinone; catechol; catechol derivatives such as t-butylcatechol; phenol derivatives such as hydroquinone monomethyl ether and 2,6-dimethylphenol; benzoquinone; benzoquinone derivatives such as 2-methylbenzoquinone and 2-chlorobenzoquinone; nitro compounds such as nitrobenzene and trinitrobenzene; and stable radicals such as 1,1-diphenyl-2-picrylhydrazyl and 1,3,5-triphenylphthalhydrazyl.

Examples of the carboxylic acid optionally used during the reaction include aliphatic carboxylic acids such as acetic acid and propionic acid; aromatic carboxylic acids such as benzoic acid, p-t-butylbenzoic acid, m-chlorobenzoic acid, m-aminobenzoic acid, and p-hydroxybenzoic acid; and acid anhydrides which form carboxyl groups through a reaction with amine such as maleic anhydride and 3,3′,4,4′-benzophenonetetracarboxylic dianhydride.

The imide prepolymer also can optionally contain, as a lubricant or mold release agent, carunauba wax, beeswax, rice wax, and aliphatic acid esters such as butyl stearate; aliphatic amides such as ethylenebisstearoamide; fatty acids such as montan acid, stearic acid, and metal salts thereof; waxes such as petroleum wax, polyethylene wax, polypropylene wax, and oxidized products thereof; and silicone oils such as polymethylsiloxane and polymethylphenylsiloxane.

These elements are preferably added in an amount of 0.01 to 5% by weight based on the total weight of the unsaturated bisimide and the aromatic diamine.

It is also possible to add a rubbery component such as amine-terminated butadiene-nitrile rubber (ATBN), or a resin component such as polytetrafluoroethylenes, silicone resins, phenol resins, and aniline resins, and heat resistant resins such as polyamideimides, polyetherimides, and polyetheretherketones. These are preferably added in an amount of 10 to 200% by weight based on the total weight of the unsaturated bisimide and the aromatic diamine.

The imide prepolymer of the present invention can further include an inorganic material or an organic material, as the filler, if necessary. Examples of such fillers are inorganic powder such as silica powder, alumina powder, glass powder, mica, talc, barium sulfate, titanium oxide, molybdenum disulfide, aluminum powder, iron powder, and copper powder; metal hydroxides such as aluminum hydroxide and magnesium hydroxide; hollow materials such as of silica, alumina, glass, and phenol resin; and reinforced fibers such as glass fiber, carbon fiber, aramide fiber, alumina fiber, silicon carbide fiber, aluminum fiber, and copper fiber. These are preferably added in an amount of 50% to 500% by weight based on the total weight of the unsaturated bisimide and the aromatic diamine.

The imide prepolymer of the present invention can further contain other additives therein. The above-mentioned lubricant, mold release agent, and other additives can be added either during or after the reaction of the unsaturated bisimide and the aromatic diamine.

The imide prepolymer of the present invention can be cured as such by heating according to various molding methods, to provide a tough cured product having an excellent heat resistance. Also, the imide prepolymer has an excellent solubility in many solvents. Namely, it is soluble in high polarity solvents such as N-methylpyrrolidone, dimethylformamide, and dimethylacetophenone, and in low polarity such as methyl cellosolve, diglyme, m,p-cresol, acetophenone, and when the solution is coated on, for example, a glass plate and cured by heating, a flexible film having an excellent heat resistance can be obtained.

Accordingly, the imide prepolymer of the present invention can be widely utilized as molded products such as sliding materials, bearings, gears, adhesives, insulation varnish, and alternatively, for heat-sensitive coating agents and materials for molding, such as a film for a flexible print base plate.

The imide prepolymer of the present invention, which is a reaction product of a specific unsaturated bisimide and a specific aromatic diamine, has a good solubility in many solvents, even in a low polarity solvent, and a flexible film having excellent heat resistance can be obtained from the solution. Also, the cured product obtained by curing upon heating according to various molding methods is tough and has an

excellent heat resistance, particularly a high tensile strength, and therefore, can be developed for the above-mentioned uses for which the imide prepolymer of the prior art can not be used.

## EXAMPLES

The present invention will now be further illustrated by, but is by no means limited to, the following Examples.

### Example 1

Into a 500 ml separable flask was charged 104.3 g of 1,3-bis(4-aminophenoxy)benzene, and the flask was dipped in an oil bath at 150° C. When the 1,3-bis(4-aminophenoxy)benzene was melted, 95.7 g of N,N′-m-phenylenebismaleimide was added while stirring for 2 minutes (bisimide/diamine molar ratio = 1.0). The mixture was further subjected to a reaction for 13 minutes while stirring, and then withdrawn and put in a vat. The vat was then placed in an air oven at 160° C and the mixture aged for 45 minutes, followed by pulverization, to obtain a prepolymer.

A molded product was obtained from this prepolymer, by molding by the compression molding method under the conditions of 200° C and 150 kgf/cm² for 40 minutes. The molded product was then placed in an air oven at 200° C and post-cured at 200° C for 24 hours.

A test specimen was cut from the molded product for the tensile test. Also, using TMA, the secondary transition point Tg was measured at a temperature elevation speed of 10° C/min. The results are shown below.

| | |
|---|---|
| Tensile strength | 10.0 kgf/mm² |
| Elongation | 3.0% |
| Tg | 205° C |

### Example 2

Into a 500 ml separable flask, 99.6 g of 1,3-bis(4-aminophenoxy)benzene, 1.0 g of t-butylhydroquinone and 1.0 g of acetic acid were charged, and the flask was dipped in an oil bath at 150° C. When the 1,3-bis-(4-aminophenoxy)benzene was melted, 100.4 g of N,N′-m- phenylenebismaleimide was added while stirring for 2 minutes (bisimide/diamine molar ratio = 1.1). The mixture was further subjected to a reaction for 15 minutes while stirring, and then withdrawn and put in a vat. The vat was then placed in an air oven at 160° C and the mixture aged for 45 minutes, followed by pulverization, to obtain a prepolymer.

A molded product was obtained from this polymer by the compression molding method under the conditions of 200° C and 150 kgf/cm² for 40 minutes. This molded product was placed in an air oven at 200° C and post-cured for 24 hours, followed by a tensile test and Tg measurement.

The results are shown below.

| | |
|---|---|
| Tensile strength | 12.3 kgf/mm² |
| Elongation | 3.6% |
| Tg | 200° C |

Thereafter, the above-mentioned prepolymer was dissolved in methyl cellosolve to prepare a solution having a resin concentration of 35% by weight. No insoluble component was found in the solution. The solution was coated on a glass plate by an applicator, and the glass plate was placed in an air oven at 100° C, the temperature was gradually elevated to 200° C, and the glass plate was heated at this temperature for 24 hours. As a result, a flexible film having a thickness of 50 µM was obtained, and the film did not fracture even when bent at an angle of 180°.

Example 3

Into a 500 ml separable flask were charged, 121.0 g of 2,2-bis[4-(4-aminophenoxy)phenyl]propane and 1.0 g of t-butylhydroquinone, and the flask was dipped in an oil bath at 150°C. When the 2,2-bis[4-(4-aminophenoxy)phenyl]propane was melted, 79.0 g of N,N′-m-phenylenebismalimide was added while stirring for 2 minutes (molar ratio = 1.0). The mixture was further subjected to the reaction for 15 minutes while stirring, and was then withdrawn and put in a vat. The vat was then placed in an air oven at 160°C and the mixture aged for 2 hours and 30 minutes, followed by pulverization, to obtain a prepolymer.

A molded product was obtained from this prepolymer by molding by the compression molding method under the conditions of 200°C and 150 kgf/cm² for 40 minutes. This molded product was further post-cured at 200°C for 24 hours, followed by a tensile test and Tg measurement.

The results are shown below.

| | |
|---|---|
| Tensile strength | 10.5 kgf/mm² |
| Elongation | 3.5% |
| Tg | 200°C |

Thereafter, the above prepolymer was dissolved in methyl cellosolve to prepare a solution having a resin concentration of 35% by weight. All of the prepolymer was dissolved at this time. The solution was coated on a glass plate by an applicator, and the glass plate placed in an air oven at 100°C, the temperature gradually elevated to 200°C, and the glass plate heated at this temperature for 24 hours. As a result, a flexible film having a thickness of 45 µm was obtained, and the film did not fracture even when bent at an angle of 180°.

Comparative Example

A molded product was made from a commercially available Kelimide 601 resin (Nippon Polyimide) by the compression molding method under the same conditions as in the Examples, and post-cured at 200°C for 24 hours. A test strip was prepared from the molded product and subjected to a tensile test and Tg measurement. The results are shown below.

| | |
|---|---|
| Tensile strength | 5.1 kgf/mm² |
| Elongation | 1.2% |
| Tg | 225°C |

Since the above Kelimide 601 resin is not soluble in methyl cellosolve, it was dissolved in N-methyl pyrrolidone to prepare a solution having a resin concentration of 35% by weight. The solution was coated on a glass plate by an applicator, and the glass plate was placed in an air oven at 160°C, the temperature gradually elevated to 200°C, and the glass plate heated at this temperature for 24 hours.

As a result, the product obtained was firm and brittle, and was easily fractured when bent, and could not be considered a film.

Evaluation Example

1. Determination of Molecular Weight

The molecular weights of the prepolymers prepared in Examples 1 to 3 were determined by a gel permeation chromatography (i.e., GPC) under the following conditions.

Column: AD-800p + AD-80M + AD-803/S x 2

Developing solution: 0.01 mole LiBr in dimethyl formamide (feed rate: 1 ml/min)

Detctor: 280 nm (UV)

Standard: Polyethylene glycol

The eluating amounts during 14 to 30 minutes after the start of the eluation operation were determined.

The GPC charts of Examples 2 and 3 are shown in Figs. 2 and 3 and results are as follows.

| Example No. | Mn | Mw | Mw/Mn | Mz | Mz/Mn |
|---|---|---|---|---|---|
| 1 | 1870 | 6190 | 3.30 | - | - |
| 2 | 2800 | 10400 | 3.71 | 29000 | 10.36 |
| 3 | 2700 | 8970 | 3.28 | 23460 | 8.68 |

2. Tensile Test of Film

The prepolymers obtained in Examples 2 and 3 were dissolved in solvents at the following formulations to prepare the varnishes.

| Inregredient | Parts by weight |
|---|---|
| Prepolymer | 35 |
| Methyl cellosolve | 55 |
| Dimethyl formamide | 10 |

The resultant varnish was coated on a glass plate by means of an applicator, followed by drying and curing in an air oven under the following conditions:

120° x 10 minutes → 160° C x 10 minutes → 200° x 4 hours

The glass plates were immersed in water and, after allowing to stand for a while, the film was readily peeled off from the glass plate. The test specimen was prepared from the film and the tensile test was carried out at room temperature.

The results are as follows.

| Sample | Tensile Strength | Elongation |
|---|---|---|
| Example 2 | 11.2 $kgf/mm^2$ | 6.5% |
| Example 3 | 10.6 $kgf/mm^2$ | 6.0% |
| Comparative Example* | - | - |

* The test specimen could not be prepared.

3. Iron/Iron Adhesion Test

To sandblast finished test pieces of iron plates, the varnish obtained above was coated on each test piece, and then the coated surfaces of the two test pieces were lapped over each other and pressed with a vice, followed by heating and curing the tensile shearing strength was determined at room temperature.

The results are as follows:

| Example | Tensile shearing strength of iron/iron |
|---|---|
| Example 2 | 185 $kgf/cm^2$ |
| Example 3 | 171 $kgf/cm^2$ |
| Comparative Example | 105 $kgf/cm^2$ |

## Claims

1. An imide prepolymer comprising a reaction product of (i) an unsaturated bisimide having the formula (I):

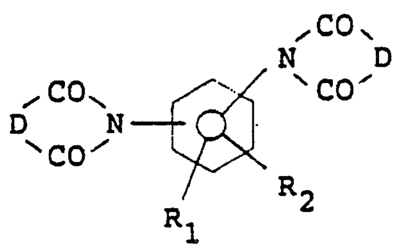

(I)

wherein D represents a divalent group including a double bond between carbon atoms, $R_1$ and $R_2$ independently represent hydrogen, methyl, nitro, cyano or halogen and (ii) an aromatic diamine having the formula (II):

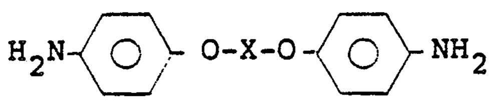

(II)

wherein X represents a divalent group of

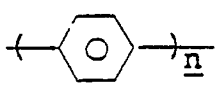

where n is an integer of 1 or more or

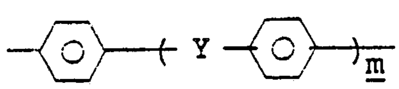 ,

where m is an integer of 1 or more, Y represents a divalent group of -O-, $-CH_2-$, $-CH(CH_3)-$, $-C(CH_3)_2-$, $-C(CF_3)_2-$, -S-, $-SO_2-$, or -CO-.

2. An imide prepolymer as claimed in claim 1, wherein the mole ratio of unsaturated bisimide/aromatic diamine is 1.0 to 1.4.

3. An imide prepolymer as claimed in claim 1 or 2, wherein said unsaturated bisimide having the formula (1) is at least one compound selected from the group consisting of N,N′-m-phenylenebismaleimide,
N,N′-p-phenylenebismaleimide,
N,N′-4-methyl-m-phenylenebismaleimide,
N,N′-4,6-dimethyl-m-phenylenebismaleimide,
N,N′-2-methyl-p-phenylenebismaleimide,
N,N′-2,5-dimethyl-p-phenylenebismaleimide,

N,N′-4-chloro-m-phenylenebismaleimide,
N,N′-4-bromo-m-phenylenebismaleimide,
N,N′-2-chloro-p-phenylenebismaleimide,
N,N′-2-bromo-p-phenylenebismaleimide,
N,N′-5-nitro-m-phenylenebismaleimide,
N,N′-2-nitro-p-phenylenebismaleimide, and
N,N′-2-cyano-p-phenylenebismaleimide.

4. A imide prepolymer as claimed in claim 1, 2 or 3 wherein said aromatic diamine having the formula (II) is at least one compound selected from the group consisting of 1,3-bis(4-aminophenoxy)benzene,
1,3-bis(3-aminophenoxy)benzene,
1,4-bis(4-aminophenoxy)benzene,
1,4-bis(3-aminophenoxy)benzene,
1,6-bis(4-aminophenoxy)biphenyl,
1,6-bis(3-aminophenoxy)biphenyl,
2,2-bis[4-(4-aminophenoxy)phenyl]propane,
2,2-bis[4-(3-aminophenoxy)phenyl]propane,
2,2-bis[4-(4-aminophenoxy)phenyl]hexafluoropropane,
bis[4-(4-aminophenoxy)phenyl]methane,
bis[4-(3-aminophenoxy)phenyl]methane,
bis[4-(4-aminophenoxy)phenyl]sulfide,
bis[4-(3-aminophenoxy)phenyl]sulfide,
bis[4-(4-aminophenoxy)phenyl]sulfone,
bis[4-(3-aminophenoxy)phenyl]sulfone, and
bis[4-(4-aminophenoxy)phenyl]ketone.

5. An imide prepolymer as claimed in any one of claims 1 to 4 wherein the number average molecular weight/weight average molecular weight of the imide prepolymer is 500/600 to 4000/16000.

6. Articles obtained by shaping a composition comprising an imide prepolymer as claimed in any one of claims 1 to 5 and heating to cure the prepolymer.

Fig. 1

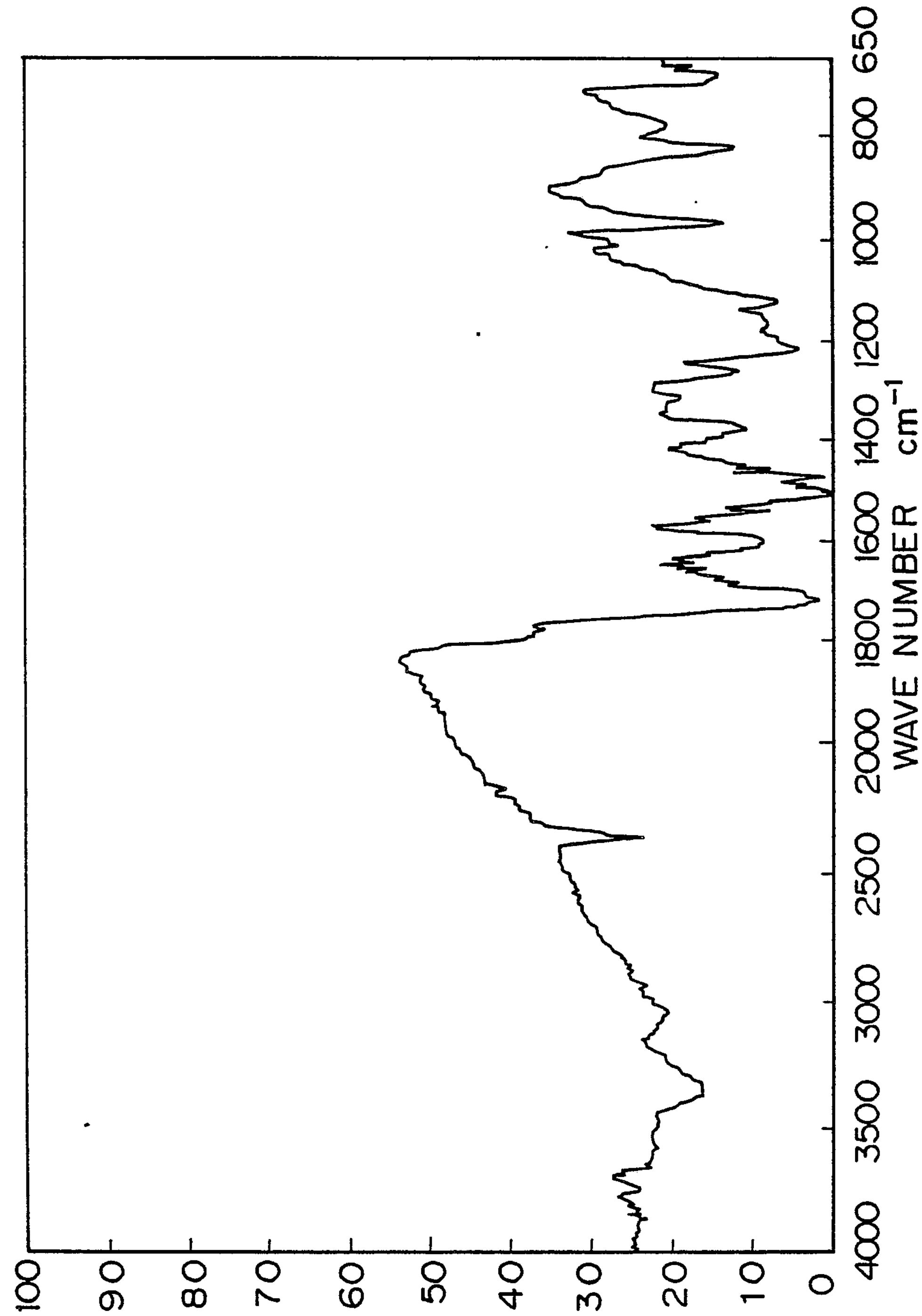
100
90
80
70
60
50
40
30
20
10
0
4000
3500
3000
2500
2000
1800
1600
1400
1200
1000
800
650
WAVE NUMBER cm$^{-1}$

Fig. 2

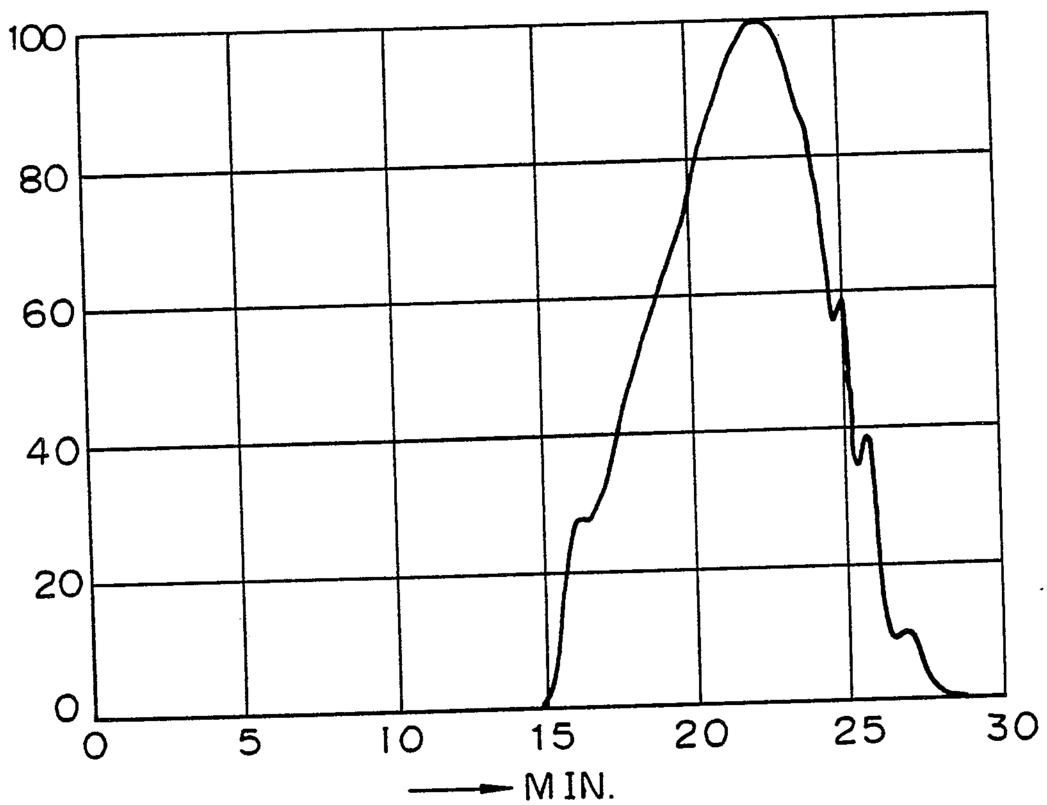

Fig. 3

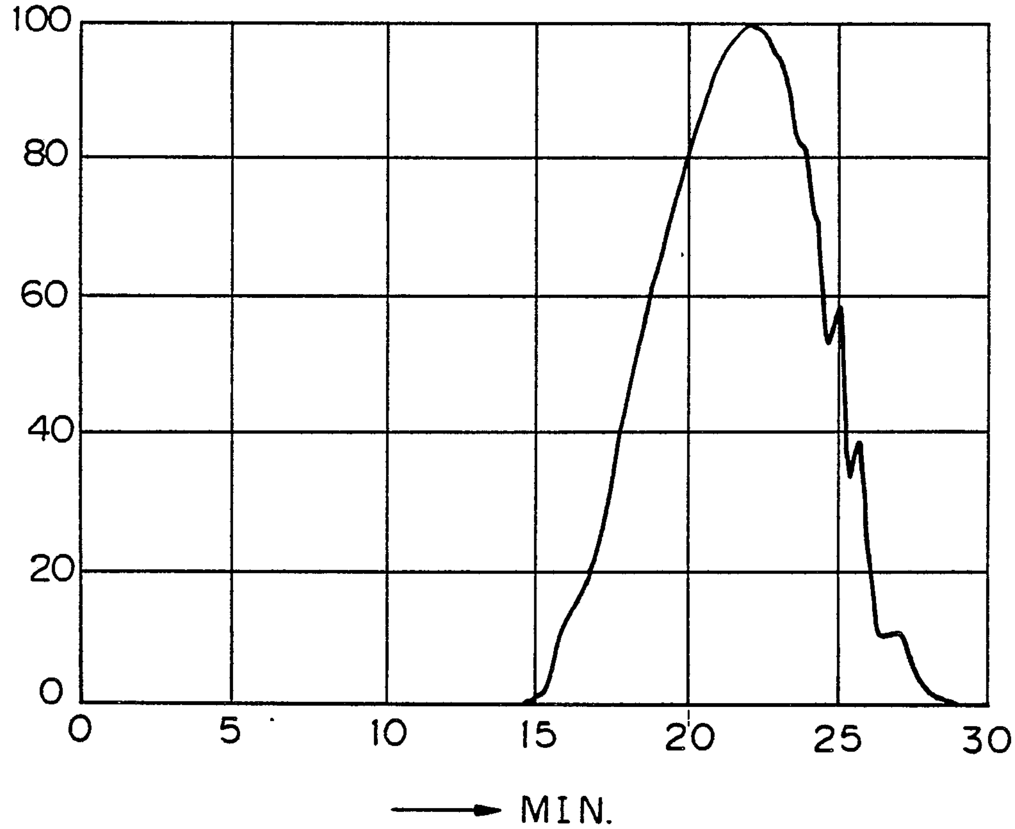

European Patent Office

# EUROPEAN SEARCH REPORT

Application Number

EP 88 31 2224

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 107 897 (HITACHI CHEMICAL CO. LTD) * Claims * | 1-6 | C 08 G 73/12 |
| X | EP-A-0 047 530 (HITACHI LTD) * Claims * | 1-6 | |
| | | | TECHNICAL FIELDS SEARCHED (Int. Cl.4) |
| | | | C 08 G |

The present search report has been drawn up for all claims

| Place of search | Date of completion of the search | Examiner |
|---|---|---|
| THE HAGUE | 31-03-1989 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)